# EUROPEAN PATENT APPLICATION

(11) **EP 2 765 547 A2**
(43) Date of publication of application: **13.08.2014**
(21) Application number: 13198630.9
(22) Date of filing: 19.12.2013
(51) Int. Cl.: G06Q 10/08, G06Q 50/28, H04B 5/00

(54) **Methods and systems for associating a tag with an asset**

(30) Priority: 19.12.2012 US 201261739615 P; 18.12.2013 US 201314133289
(71) Applicant: Aeroscout Ltd, 76702 Rehovot (IL)
(72) Inventor: Aljadeff, Daniel, IL Kiriat Ono (IL)
(74) Representative: Clayton-Hathway, Anthony Nicholas

(57) **Abstract**

Methods and systems are disclosed that associate a wireless tag with an asset. A wireless tag may include a short range communication interface configured to communicate over a short range communication link with a short range communication component of an asset. The wireless tag may also include a long range communication interface configured to communicate over a long range communication link with a remote element. In one aspect, operations may include determining whether the wireless tag can communicate with the short range communication component and receiving asset information from the short range communication component over the short range communication link. Operations may also include sending the asset information and wireless tag information to the remote element over the long range communication link to generate an association between the wireless tag and the asset based on the asset information and the wireless tag information.

## Description

The present invention relates to network communications and, more particularly, to methods and systems for associating a wireless tag with an asset.

The ability to locate and track assets, such as devices, products, documents, persons, equipment, vehicles, etc. is important in many applications and industries. For example, hospitals may wish to track patient equipment (e.g., patient beds), manufacturers may wish to track parts in an assembly plant, warehouses may wish to track supplies, and business may wish to track equipment (e.g., computer equipment, etc.). In some applications, assets may be monitored using wireless tags that send wireless signals to a reader device. In such applications, a wireless tag may be attached to an asset and may be configured to send information to a tag reader that may be stationary or movable. The information may include location information associated with the tag. Thus, where a tag is affixed to the asset, a system that receives the wireless tag information from the tag via the reader device may determine the location of the asset. To perform properly, however, there must be a record that associates the wireless tag with the asset to which the tag is affixed. This typically requires a user to manually record an association between the wireless tag and each asset associated with the tag.

Problems can arise, however, when a tag needs to be newly affixed to an asset. For example, in order to accurately monitor the asset with the tag, a user must record some type of association between the tag and the asset. This can be a time consuming process, especially where a large number of assets are to be tracked.

Accordingly, methods and systems consistent with the disclosed embodiments provide an improved approach to associate a wireless tag with an asset.

The present invention includes a method for associating a wireless tag with an asset. In one aspect, the method may include establishing communication between the wireless tag and a short range communication component included in the asset. The wireless tag may be affixed to the asset and the wireless tag may be in communication range with the short range communication component. The method may also include receiving, by the wireless tag, asset information from the short range communication component and sending, by the wireless tag, the asset information and wireless tag information to a server. The method may further include associating, by the server, the wireless tag with the asset based on the wireless tag information and the asset information.

The invention also includes a method for providing security processes associated with an asset including a short range communication component. The method may include determining whether the short range communication component can communicate with a wireless tag configured to perform short range communications with the short range communication component. The method may also include generating, by the wireless tag, an alert message based on a determination that the wireless tag cannot communicate with the short range communication component. Further, the method may include sending, by the wireless tag, the alert message to a server over a long range communication network (e.g. IEEE802.11a/b/g/n, IEEE802.15.4, cellular network, etc.) and performing, by the server, a server-based security process based on the alert message received from the wireless tag.

The invention also includes a wireless tag that may include a short range communication interface configured to communicate over a short range communication link with a short range communication component of an asset. The wireless tag may also include a long range communication interface configured to communicate over a long range communication link with a remote element and a processor connected to a memory storing software instructions. The wireless tag may also include a processor configured to execute the software instructions to perform operations consistent with disclosed embodiments. The processor may be configured to perform operations including determining whether the wireless tag can communicate with the short range communication component and receiving asset information from the short range communication component over the short range communication link. The operations may also include sending the asset information and wireless tag information to the remote element over the long range communication link to generate an association between the wireless tag and the asset based on the asset information and the wireless tag information.

The invention also includes a wireless tag that may include a short range communication interface configured to communicate over a short range communication link with a short range communication component of an asset. The wireless tag may also include a long range communication interface configured to communicate over a long range communication link with a remote element. Further, the wireless tag may include a memory storing software instructions and a processor configured to execute the software instructions to perform operations. The operations may include, for example, determining whether the wireless tag can communicate with the short range communication component over the short range communication link. The operations may also include generating, by the wireless tag, an alert message based on a determination that the wireless tag cannot communicate with the short range communication component. In addition, the operations may also include sending, by the wireless tag, the alert message to a remote element over the long range communication link.

Other embodiments of the invention are disclosed that are configured to perform similar and other aspects than those exemplified above. It is to be understood that any feature of an embodiment may be a feature of any other embodiment, and the disclosed embodiments are not limited to the details of construction and to the arrangements set forth in the following description or illustrated in the drawings. The disclosed embodiments may include additional aspects in addition to those described and is capable of being practiced and carried out in various ways. Also, it is to be understood that the phraseology and terminology employed herein, as well as in the abstract, are for the purpose of description and should not be regarded as limiting.

The accompanying drawings, which are incorporated and constitute part of the specification, illustrate certain embodiments of the invention, and together with the description, serve to explain exemplary principles of the disclosed embodiments.

As such, those skilled in the art will appreciate that the conception upon which this disclosure is based may readily be utilized as a basis for designing other structures, methods, and/or systems for carrying out the several purposes of the present disclosure. It is important, therefore, to recognize that the claims should be regarded as including such equivalent constructions insofar as they do not depart from the spirit and scope of the present disclosure.

The accompanying drawings, which are incorporated in and constitute a part of this specification, illustrate various exemplary aspects of the invention and, together with the description, explain disclosed principles.
FIG. 1 is a diagram illustrating an exemplary system that may be used to implement certain aspects of the disclosed embodiments.
FIG. 2 is a diagram illustrating an exemplary asset with an affixed wireless tag consistent with certain disclosed embodiments.
FIG. 3 is a diagram illustrating an exemplary system including multiple assets consistent with disclosed embodiments.
FIG. 4 is a diagram illustrating an exemplary system including an asset and a wireless tag consistent with disclosed embodiments.
FIG. 5 is a flow diagram illustrating an exemplary asset association process consistent with the disclosed embodiments.
FIG. 6 is a flow diagram illustrating an exemplary asset security process consistent with the disclosed embodiments.

Reference will now be made in detail to the present embodiments of the invention, certain examples of which are illustrated in the accompanying drawings.

The methods and systems consistent with the disclosed embodiments may automatically determine an association between an asset and a wireless tag. In one aspect, a wireless tag (e.g., a radio frequency identification (RFID) tag) may be attached to an asset. In accordance with certain disclosed embodiments, an asset may include, for example, any physical thing that can have a tag affixed to it. For instance, an asset may be any type of equipment, product, tool, tool accessory (e.g., tool case, tool compartment, etc.), vehicle (e.g., car, truck, bus, etc.), vehicle part, ship, ship part, air transportation vehicle part, item, locomotive engine, locomotive cargo train, locomotive part, container, storage item, medicine container, hospital bed, wheelchair, fixture, building or residence fixture, wall, door, door frame, entrance way, outside fixture (e.g., lamp post, fence, etc.), animal accessory (e.g., dog collar, horse saddle component, etc.), cargo container, product package, and any other type of physical thing that can host an affixed wireless tag (of any appropriate size).

In certain embodiments, the asset may include one or more short range communication components that are configured to perform, or are compatible with, Near Field Communications (NFC) or an equivalent type of communications. The short range communication component may exchange information with the wireless tag using NFC, or similar, protocols. In certain aspects, the wireless tag may receive from the short range communication component identification information, or other information, relating to the asset. The tag may be configured to send the asset information received from the short range communication component to a remote computer, such as a server. The tag may also send tag information to the remote computer, such as tag identification information, time stamp information, etc. The remote computer may perform processes that automatically link the tag with the asset based on the tag information and asset information received from the tag. In one embodiment, the remote computer may generate a record that associates the tag with the asset via identification information. The remote computer may store the record in a data structure including other tag and asset associations relating to other assets and affixed wireless tags. The above examples are not intended to be limited to the disclosed embodiments. Other aspects of the disclosed embodiments are discussed below and described in the exemplary figures.

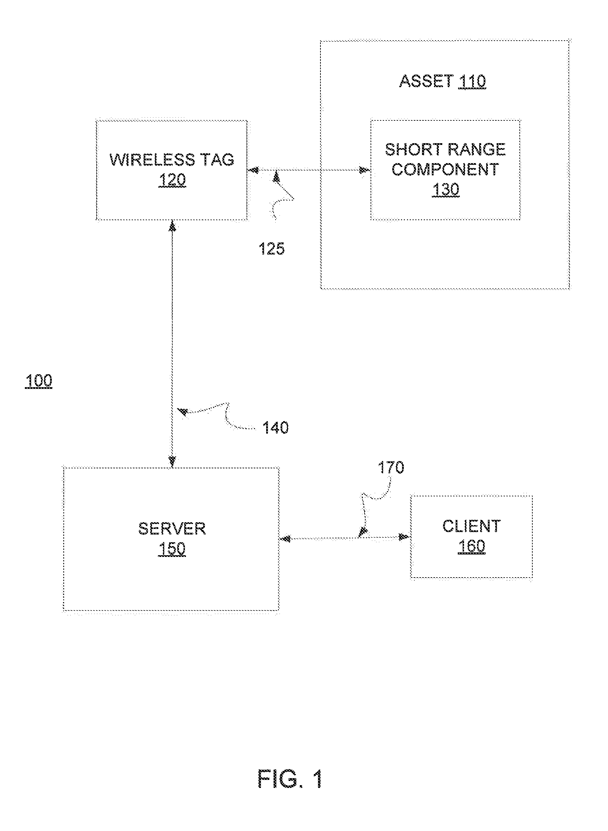

FIG. 1 is a diagram illustrating an exemplary system 100 that may be used to implement certain aspects of the disclosed embodiments. The type, number, and arrangement of devices, components, and elements illustrated in FIG. 1 may vary consistent with the disclosed embodiments.

In one embodiment, system 100 may include at least one asset 110, a server 150, and client 160. In one aspect, asset 110 may include a short range communication component 130 that can communicate with wireless tag 120 via a communication link 125. Wireless tag 120 may be affixed to asset 110, such as on the surface of asset 110 or affixed to a component of asset 110. Server 150 may communicate with wireless tag 120 over a communication link 140 and may communicate with client 160 over communication link 170.

In one embodiment, asset 110 may be a physical thing that is configured with a component that can perform NFC or similar type of communications. Asset 110 may be a powered asset (e.g., electronic equipment) or a passive asset (e.g., bed, wheelchair, etc.). For example, asset 110 may be a hospital bed that includes a short range communication component. Asset 110 may also be a tool (e.g., a drill, power saw, etc.), a computer or computer equipment (e.g., a laptop, mobile device (e.g., smart phone, tablet, etc.), desktop computer, printer, router, server, gateway, computer rack equipment, etc.), warehouse item (e.g., storage container, box, crates, shelving unit, an item or product, etc.), a building or residence fixture (e.g., a wall, entrance way or part of an entrance way (e.g., door frame, etc.), a vehicle (e.g., car, motorcycle, dump truck, etc.), clothing or clothing accessory (e.g., a shirt, belt, pants, hat, badge, jewelry, etc.), or any other physical thing that may be stationary or movable, configured in a manner consistent with the disclosed embodiments.

Short range communication component 130 may be a chip or circuitry that is configured to perform NFC communications, such as, for example, communications with other elements within a few tens of centimeters, although other distance ranges may be implemented by the disclosed embodiments. In certain embodiments, short range communication component 130 may be configured or is compatible with known NFC standards that enable two-way wireless communications with wireless tag 120. For instance, short range communication component 130 may be compatible with ISO/IEC 18092 / ECMA-340, ISO/IEC 21481 / ECMA-352, and ISO/IEC 14443 standards, and may exchange data in NFC Data Exchange Format (NDEF), although other formats and standards may be implemented by the disclosed embodiments. In one aspect, short range communication component 130 may be a powered NFC chip or circuitry. In other aspects, short range communication component 130 may be an unpowered NFC chip or circuitry.

In certain aspects, short range communication component 130 may be included in asset 110 in a location depending on the type of asset 110. For example, short range communication component 130 may be located on a hospital bed frame of a hospital bed asset. As another example, short range communication component 130 may be located on the underside surface of a product package, allowing NFC communications to take place through the package surface. Short range communication component 130 may also be an NFC component included in the skin, surface, and the like of a package covering or label of an asset 110. The position and location of short range communication component may vary based on the type of asset consistent with the disclosed embodiments.

The disclosed embodiments may implement other forms of communication components and protocols to exchange information between asset 110 and wireless tag 120. For example, instead of short range communication component 130 using NFC type communications, component 130 may be a component configured to perform other types of wireless communications with tag 120 consistent with short range communications associated with the disclosed embodiments.

Wireless tag 120 may be a tag device that is configured to communicate with short range communication component 130. For example, wireless tag 120 may be an active RFID type tag that is configured to send and receive data to and from short range communication component 130. Wireless tag 120 may communicate with short range communication component 130 over connection 125, which may be a wireless connection compatible with NFC standards. In certain aspects, short range communication component 130 and wireless tag 120 may perform secure identification processes using NFC protocols. In certain aspects, wireless tag 120 may be configured to communicate with different types of NFC compatible devices. Thus, when positioned in communication range of a short range communication component 130 on an asset 110, wireless tag 120 may be configured to automatically perform functions consistent with the disclosed embodiments.

In accordance with certain embodiments, wireless tag 120 may be affixed to asset 110. The manner and process that may be used to affix wireless tag 120 to asset 110 is not limited to any particular method or mechanism. For example, a user may attach wireless tag 120 to asset 110 using any connection means appropriate for affixing the tag to asset 110 (e.g., cradle, bonding material, clip, strap, etc.). As another example, a machine or other automated mechanism may attach wireless tag 120 to asset 110, such as a robotic mechanism in an assembly line.

In certain embodiments, wireless tag 120 may be affixed to asset 110 in a location that is within communication range of short range communication component 130 (e.g., in accordance with known NFC standards). In certain aspects, wireless tag 120 may be positioned on asset 110 such that it is out of communication range of short range communication component 130. For example, a user or a machine may inadvertently affix wireless tag 120 in a location on asset 110 that is too far from short range communication component 130 such that tag 120 and component 130 cannot receive data from the other.

Server 150 may be one or more computers configured to execute software to perform one or more server processes, such as sending and/or receiving information over a network, processing information, and/or producing results of processed data. Server 150 may also be configured to execute software that performs one or more processes consistent with the disclosed embodiments. In one embodiment, server 150 may be a computer system that is configured to receive information from elements in a wireless network, such as wireless tag 120. Server 150 may be configured to send data, commands and/or programming information to wireless tag 120 to program the functionality of tag 120. Server 150 may also be configured to communicate with asset 110 if asset 110 is configured to communicate with server 150 (e.g., wirelessly or through wire line connection(s)). In certain embodiments, server 150 may be configured to execute software that performs tag association processes consistent with the disclosed embodiments. For example, server 150 may receive tag and asset information from wireless tag 120. Based on the received information, server 130 may execute software that associates wireless tag 120 with asset 110.

Server 150 may communicate with wireless tag 120 over connection 140. In one embodiment, connection 140 may be wireless connection that is compatible with known communication standards for enabling wireless tag 120 to send and receive data to and from server 150. In one exemplary embodiment, the wireless connection 140 may be an IEEE 802.11x (e.g., IEEE 802.11a/b/g/n/ac/ad) network, an IEEE 802.15.4 network, or any other known wireless network that facilitates wireless communications between elements.

Server 150 may also be configured to communicate with other elements of system 100. For example, server 150 may be configured to communicate with client 150 over connection 170. Connection 170 may be any type of wireless or wire line connection that allows server 150 and client 160 to communicate. For example, connection 170 may be the Internet, a Local Area Network, a Wide Area Network, a IEEE 802.11x (e.g., IEEE 802.11a/b/g/n) network, or any other known wireless network that facilitates wireless communications between elements, known wire line network (e.g., Ethernet, etc.), or a combination of both. Connections 140 and 170 may include any infrastructure that is used to facilitate communications with server 150, such as communication links, wireless towers, routers, gateways, etc.

Server 150 may include, for example, one or more processors that execute instructions to perform processes consistent with aspects of the disclosed embodiments. Server 150 may also include one or more memory devices that store software and/or program instructions that, when executed by the one or more processors of server 150, perform one or more processes consistent with aspects of the disclosure. Server 150 may include other known computing components for performing known computing functions, such as executing software, storing and accessing information from memory, processing information, and generating and sending information and receiving over a communication link (e.g., communication links 140, 170).

Client 160 may include one or more computer systems. For example, client(s) 160 may include a general purpose or notebook computer, a mobile device with computing ability, a server, a desktop computer, a tablet, or any combination of these computers and/or affiliated components. Client(s) 160 may be configured with one or more processors and one or more memory devices that store data and software instructions that are executable by the one or more processors. Client(s) 160 may also include communication software that, when executed by a processor, provides communications with communication link 170, such as Web browser software, tablet or smart hand held device networking software, etc.

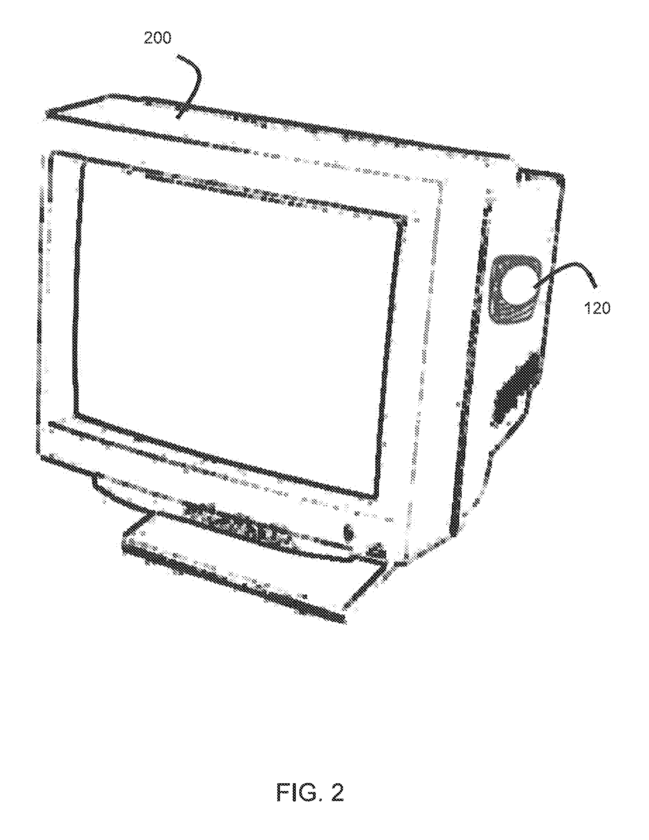

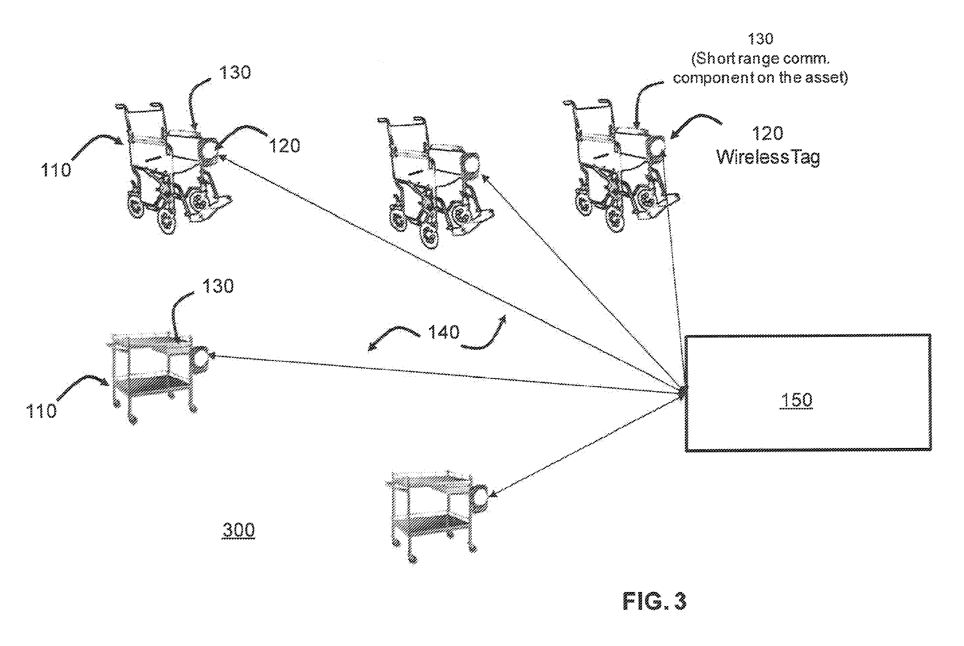

As mentioned, the disclosed embodiments provide mechanisms and processes that automatically generate associations between wireless tag 120 and an asset 110 that the tag is affixed to. Fig. 2 shows an exemplary asset 200 (e.g., computer display device) with an affixed wireless tag 120 consistent with disclosed embodiments. Aspects of the disclosed embodiments also include performing similar processes for systems including more than one asset having a wireless tag. FIG. 3 illustrates an exemplary system 300 including multiple assets with affixed tags consistent with the disclosed embodiments. As shown, system 300 includes server 150 that is configured to communicate over communication links 140 with wireless tags 120 that are each affixed to assets 110. Each asset 110 may include a short range communication component 130. In accordance with disclosed embodiments, each short range communication component 130 and wireless tag 120 associated with each asset 110 of system 300 may be configured and operate similar to the short range communication component 130, wireless tag 120, and asset 110 disclosed herein in connection with Fig. 1. Further, server 150 of system 300 may be configured and operate similar to that of server 150 of Fig. 1.

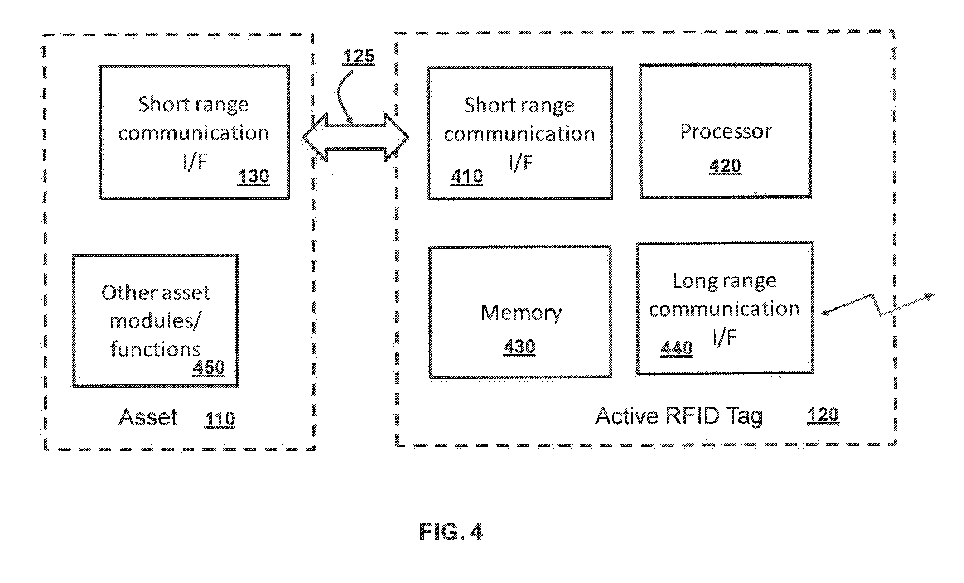

Fig. 4 shows an exemplary system including asset 110 and wireless tag 120 consistent with certain disclosed embodiments. In certain aspects, asset 110 may include short range communication component 130, which may be a powered or unpowered NFC chip or circuitry. Short range communication component 130 may be configured to provide unidirectional or bidirectional communications with other element(s) within a communication range of short range communication component 130. For example, short range communication component 130 may be configured to perform NFC type communications over wireless communication link 125 up to a certain range, such as, for example, up to a few tens of centimeters. Short range communication component 130 may include a short range communication interface (not shown) that is configured to send and receive data over communication link 125 in accordance with the communication protocols associated with short range 130 (e.g., NFC) communication protocols.

In certain embodiments, asset 110 may include other asset modules and/or functions 450. Module(s)/function(s) 450 may include one or more chips and/or circuits that is configured to perform one or more processes consistent with the disclosed embodiments. Module(s)/function(s) 450 may include software processes that are executed by one or more processors to perform one or more processes consistent with the disclosed embodiments. Further, in certain aspects, module(s)/function(s) 450 may be configured to perform processes associated with the type of asset 110.

Asset 110 may be a powered asset, such as an electronic device, equipment, etc. that performs operations by one or more powered components. Asset 110 may also be an unpowered asset, such as an unpowered tool (e.g., hammer), article, etc. that does not comprise other electronic circuitry. For example, asset 110 may be a passive asset such as a hospital bed, wheelchair, a miner's helmet, a briefcase, an article of clothing, an entrance or egress fixture for individuals or vehicles, a fixture of a building, etc.

In certain embodiments, wireless tag 120 may include a short range communication interface 410, processor 420, memory 430, and a long range communication interface 440. Short range communication interface 410 may include a chip or circuitry that is configured to send and receive data over communication link 125. In certain aspects, short range communication interface 410 may be configured to provide communications with short range communication component 130 of an asset 110 based on the communication protocol used by short range communication component 130, such as NFC protocols (e.g., NFC protocols in accordance with ISO/IEC 18092). Short range communication interface 410 may provide unidirectional or bidirectional communications with short range communication component 130.

Processor 420 may include one or more processors that is configured to execute software instructions to perform operations consistent with the disclosed embodiments. The disclosed embodiments are not limited to particular types and configurations of processor 420. Memory 430 may include one or more memory devices configured to store data and/or software instructions. In certain aspects, memory 430 stores software instructions that, when executed by processor 420, perform one or more operations consistent with the disclosed embodiments. Memory 430 may be any type of memory device configured to store data and/or software instructions, such as a RAM, ROM, SDRAM, DRAM, Flash memory and the like. The disclosed embodiments are not limited to any particular type and configuration of memory 430. Wireless tag 120 may include other components (not shown) that are configured to allow memory 430 to be accessed by, for example, processor 420.

Long range communication interface 440 may include one or more chips or circuitry that is configured to provide long range communications. For example, long range communication interface may be a communication interface that enables wireless tag 120 to send and receive data over communication link 140. In certain embodiments, long range communication interface 440 may be configured to provide communications to another element that is positioned at a distance further than the distance between short range communication component 130 and short range communication interface 410 of wireless tag 120. For example, long range communication interface 440 may provide communications over Wi-Fi network(s), UWB networks, Bluetooth network(s), Infrared communication link(s), ultrasonic networks, cellular networks, etc.

In certain embodiments, wireless tag 120 may include a display (not shown) that can display information, such as tag information and/or asset information.

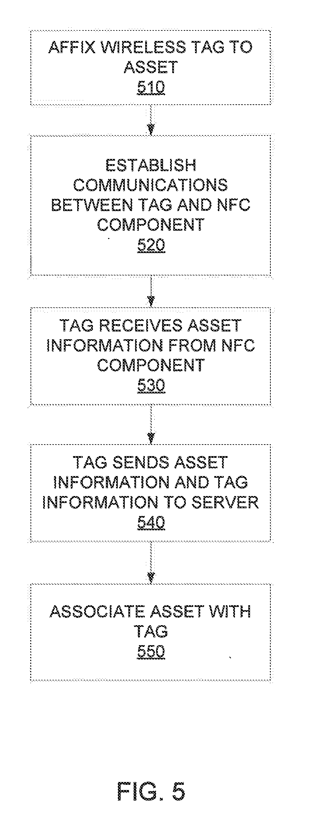

Fig. 5 shows a flowchart of an exemplary asset association process consistent with certain disclosed embodiments. Initially, a wireless tag 120 may be affixed to asset 110 (step 510). In certain aspects, wireless tag 120 may replace an existing tag on asset 110, or wireless tag may be newly affixed to asset 110. As noted above, the manner and process by which wireless tag 120 is affixed to asset 110 is not limited to any particular means or method.

Once wireless tag 120 is affixed to asset 110, it may be initiated and configured. In one embodiment, wireless tag 120 may be automatically initiated and configured when (or soon after) it is affixed to asset 110. In other embodiments, wireless tag 120 may be configured and programmed prior to being affixed to asset 110.

In other embodiments, asset 110 may be configured with components that enable and activate wireless tag 120. For instance, different asset types may include computing components that can program different tracking and/or telemetry parameters for the tag 120 affixed to the asset. For instance, asset 110 may include a device that stores program information for wireless tag 120. Asset 110 may be configured to activate and program wireless tag 120 using the device and short range communication component 130. In certain aspects, asset 110 may receive tag program information from server 150 (or another computing component) that is used to program wireless tag 120.

At step 520, wireless tag 120 and short range communication component 130 may establish communications. For example, wireless tag 120 may perform a communication range check process that includes sending a communication check signal to short range communication component 130. Short range communication component 130 may be configured to receive (or to monitor communication link 140 to receive) the check signal and return an acknowledgment signal to wireless tag 120 to confirm that the two components are within communication range of each other. In other embodiments, short range communication component 130 may be configured to perform processes that send a communication check signal to wireless tag 120, which may be configured to receive the check signal and return an acknowledgment signal to short range communication component 130 to confirm that the two components are within communication range of each other. Other processes of checking whether short range communication component 130 and wireless tag 120 are within communication range may be implemented by the disclosed embodiments. Wireless tag 120 and/or short range communication component 130 may periodically send communication signal(s) or may send such signals in response to a command, such as a command received from server 150, asset 110, another component of asset 110, or another computing element of system 100 or 300.

In certain embodiments, wireless tag 120 and short range communication component 130 may be configured to perform secure identification processes that confirm the identity of each component. Such processes may ensure that wireless tag 120 is authorized to send data to or receive data from short range communication component 130. In certain aspects, wireless tag 120 and short range communication component 130 may use NFC protocols to perform secure identification processes.

In certain embodiments, short range communication component 130 may be configured to send asset information to wireless tag 120 (step 530). For example, short range communication component 130 may be configured to collect and transfer asset information relating to asset 110. Asset information may include, for example, status and/or telemetry data (e.g., usage data, battery status, fault indications, etc.), asset identification information (e.g., SKU, item identifier, vehicle VIN, etc.) for asset 110, short range communication component identification information, and another of type of information relating to asset 110. Short range communication component 130 may be configured to periodically send the asset information to wireless tag 120, or short range communication component 130 may be configured to send the asset information based on one or more conditions, or in response to command. For instance, short range communication component 130 may be configured to send asset information to wireless tag 120 based on a certain size of collected asset information, certain types of asset information (e.g., send immediately if location has moved, send periodically if location has not moved over a certain period of time, etc.).

Wireless tag 120 may receive the asset information from NFC device (step 530) and store the information in a memory. Wireless tag 120 may also be configured to collect and store tag information relating to wireless tag 120. Tag information may include, for example, tag identification information for tag 120, timestamp information, location information (e.g., GPS information, etc.), sensor information (e.g. temperature, humidity, motion, etc.), history information (e.g., last communication time with short range communication component 130, etc.), and any other information relating to wireless tag 120 or relating to communications with short range communication component 130.

In certain aspects, wireless tag 120 may be configured to send the asset information and the tag information to a remote component for processing (step 540). In one aspect, wireless tag 120 may send the information to server 150. Wireless tag 120 may send the information periodically or in response to a request, such as a request from server 150. Alternatively, wireless tag 120 may be configured to send the information based on one or more conditions. For example, wireless tag 120 may be configured to check its location to determine whether it is within a certain vicinity of asset 110 or a defined location. If not, wireless tag 120 may be configured to send the asset and tag information in response to that determination. As another example, wireless tag 120 may be configured to send the asset and tag information in response to a determination that wireless tag 120 is not within communication range of short range communication component 130.

In certain embodiments, wireless tag 120 may be configured to send tag and/or asset information to server 150 in response to certain conditions. For example, wireless tag 120 may send asset information to server 150 when it determines that asset 110 is activated or deactivated, such as where asset 110 includes electronic equipment. In another embodiment, wireless tag 120 may be configured to send tag and/or asset information to server 150 in response to an external or internal event, such as when a push button on the tag is pressed, at a certain time of day, when wireless tag 120 is triggered by an exciter, based on a certain temperature measured by a sensor included with wireless tag 120, etc.

Wireless tag 120 may be configured to display asset and/or tag information on a display included on wireless tag 120 in response to the above described exemplary conditions, or external and internal events.

Server 150 may be configured to receive the tag information and/or asset information provided by wireless tag 120 (step 540). In one aspect, server 150 may be configured to execute software processes that analyze the received information to generate an association between wireless tag 120 and asset 110 (step 550). For example, server 150 may execute software processes that automatically generate a record reflecting the associations between asset 110 and wireless tag 120. The record may include, for example, the identification information relating to tag 120 and asset 110, status information of asset 110 and/or tag 120, and any other asset information that may be provided by wireless tag 120.

Server 150 may be configured to generate and store a data structure (e.g., a table, etc.) of associations for wireless tags 120 and assets 110. For example, server 150 may maintain and update a table of records including associations between the assets 110 and wireless tags 120 shown in the exemplary system 300 of Fig. 3. Server 150 may be configured to automatically update the association table as new and updated information is received from one or more wireless tags 120 affixed to corresponding assets 110.

In certain embodiments, server 150 may execute software processes that generate a report relating to the tag and asset associations. For instance, server 150 may generate and send an association report to client 160 over communication link 170. The association report may include an association table reflecting the associations between one or more wireless tags 120 and corresponding assets 110. The association report may include information reflecting a single tag 120. Server 150 may also include display components to display an interface generated by server 150 including association information for one or more wireless tags 120 and/or assets 110.

In other embodiments, wireless tag 120 may be configured to send a signal to server 150 (or another component, such as a portable computer, mobile device, etc.) indicating that it is active. In response, server 150 (or another component) may send configuration information that programs wireless tag 120. For instance, wireless tag 120 may be configured such that the periodic transmission interval is programmed according to the asset type to allow, for example, faster or slower tracking of tag 120 and/or asset 110. In one aspect, server 150 may send program information to wireless tag 120 after server 150 has determined the association between asset 110 and wireless tag 120 (e.g., step 550).

The disclosed embodiments may also provide functionalities that control the operation of asset 110. For example, asset 110 may be enabled, disabled, and/or programmed by the presence or absence of a wireless tag 130 affixed to it. In certain aspects, the removal of wireless tag 130 from asset 110 may cause asset 110 to operate or may restrict one or more operations or use of the asset.

In certain aspects, wireless tag 120 may comprise one or more sensors that are used and/or activated in relation to a specific asset 110. For example, a wireless tag 110 may be configured to measure temperature, humidity, motion, shock or any other parameter or a combination of them in relation to a specific type of asset 110. Wireless tag 120 may be configured to measure certain parameters when the wireless tag 120 is affixed to the asset 110, when it is removed from asset 110, periodically, or at the occurrence of any event the wireless tag 120 may be configured to react to. For instance, asset 110 may reflect a frozen food item that is packaged with a short range communication component 130 in the packaging for the item. In one aspect, a wireless tag 110 may be affixed to the frozen food item (asset 110) and begin reading asset information from the short range communication component for that item. The asset information may identify the type of asset (e.g., frozen food item). Based on the received asset information, wireless tag 120 may be configured to automatically determine one or more parameters associated with the type of asset. For example, wireless tag 120 may identify that asset 110 is a frozen food item and thus begin measuring temperature and humidity via one or more sensors included in wireless tag 120. Thus, in certain embodiments, wireless tag 120 may be programmed to automatically determine what asset information to collect and/or what parameter(s) to measure based on the type of asset the tag is affixed to. In certain aspects, wireless tag 120 may report one or more telemetry parameters to server 150 through long range communication link 140 and/or communicate them to asset 110 through short range communication link 125.

In one embodiment, wireless tag 130 may be configured to generate and transmit an alert if it is removed from asset 110. For instance, wireless tag 130 may execute software instructions via memory 430 and processor 420, for example, that determines whether wireless tag 120 is within communication range of asset 110. In certain aspects, wireless tag 120 may determine that short range communication interface 410 is unable to communicate with short range communication component 130 (e.g., wireless tag 120 has been moved out of communication range of short range communication component 130). Based on that determination, wireless tag 120 may generate an alert message that includes alert information and sends the alert message to a remote element using, for example, long range communication interface 440. The alert information may include, for example, timestamp information when wireless tag 120 determined that it can no longer communicate with short range communication component 130, identification information of wireless tag 120, identification information of short range communication component 130, identification information of asset 110, any status information previously received from asset 110, and/or one or more alert codes reflecting a particular condition associated with wireless tag 120 (e.g., a component failure), etc. In one embodiment, wireless tag 120 may send the alert message to server 150 for subsequent processing. In other embodiments, wireless tag 120 may be configured to send alert messages to one or more other remote elements. For example, memory 430 may include software instructions that, when executed by processor 420 generate and send alert message(s) to a remote element, such as a smart phone or a particular user, a tag reader element, laptop, tablet, etc. In certain aspects, wireless tag 120 may be configured to send other types of messages or data to server 150 while being configured to send alert messages to a different remote element.

In certain embodiments, asset 110 may be configured to perform one or more processes that control operation of asset 110 based on whether wireless tag 120 is in communication range of short range communication component 130. For example, module(s)/function(s) 450 of asset 110 may be configured to receive data from short range communication component 130. The data sent from short range communication component 130 may include data that may have been received from wireless tag 120 over communication link 125. The data sent from short range communication component 130 may include information indicating that wireless tag 120 is in communication range or is not in communication range of short range communication component 130. Based on the received data, module(s)/function(s) 450 may be configured to perform one or more processes that control the operation of asset 110. For example, module(s)/function(s) 450 may generate signals that prevent asset 110 from operating when it determines that short range communication component 130 cannot communicate with wireless tag 120. Module(s)/function(s) 450 may also generate one or more signals that cause asset 110 to perform limited operations based on predefined rule(s). For instance, module(s)/function(s) 450 may generate a signal that causes asset 110 to perform a subset of operations that asset 110 is capable of performing based on data received from short range communication component. In other embodiments, module(s)/function(s) 450 may generate one or more signals that enable asset 110 to perform one or more operations. For example, module(s)/function(s) 450 may determine, based on the data from short range communication component 130, that wireless tag 120 is within communication range, such as, for example, when wireless tag 120 is first affixed to asset 110 and is activated. Based on that determination, module(s)/function(s) 450 may generate one or more signals that enables asset 110 to perform one or more operations (e.g., powers on asset 110, activates one or more functionalities of asset 110, etc.).

In other embodiments, module(s)/function(s) 450 may generate one or more signals that program asset 110 to perform one or more operations based on the presence (or absence) of wireless tag 120. For example, wireless tag 120 may send program information for asset 110 over communication link 125 to short range communication component 130, which provides the program information to module(s)/function(s) 450. Module(s)/function(s) 450 may be configured to execute software processes that program asset 110 based on the received program information.

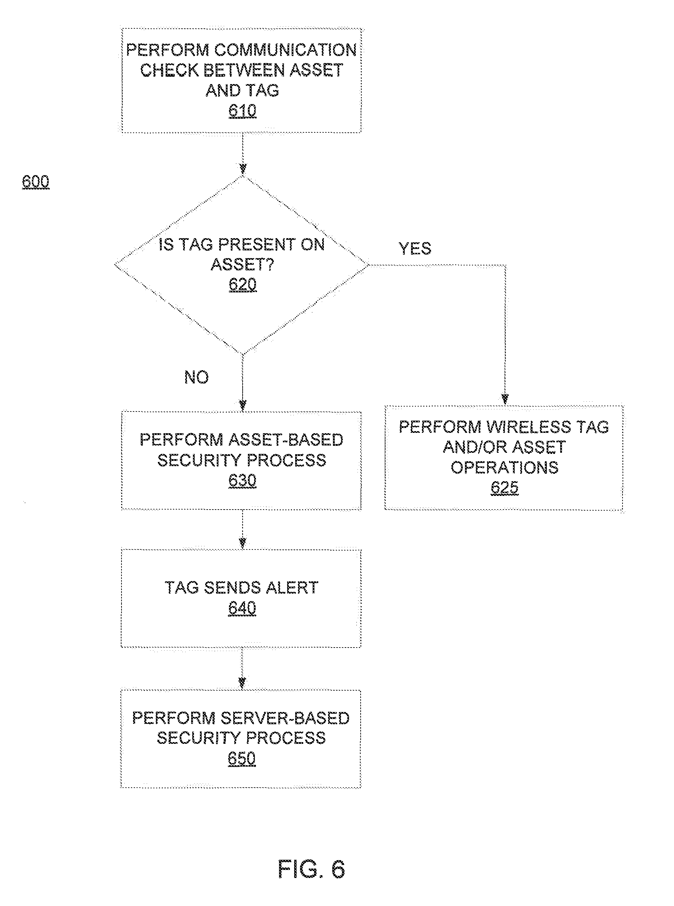

Fig. 6 shows a flowchart of an exemplary security process that may be performed by certain disclosed embodiments. In one aspect, short range communication component 130 and wireless tag 120 may perform a communication check between asset 110 and wireless tag 120 (step 610). In one embodiment, short range communication component 130 and wireless tag 120 may perform a secure identification process to confirm whether asset 110 and wireless tag 120 are authorized to communicate (e.g., step 610). If the secure identification process results in an unauthorized relationship between wireless tag 120 and asset 110, the disclosed embodiments may prevent further communications between the two elements. Wireless tag 120 and/or asset 110 may be configured with security information that establishes an authorized relationship between the two elements. In certain aspects, wireless tag 120 may be configured to send a security alert message to server 150 indicating that wireless tag 120 attempted a communication with asset 110, which is not authorized to communicate.

Based on the communication check process (e.g., step 610), the disclosed embodiments may determine whether wireless tag 120 is present on asset 110 (e.g., whether the tag been removed from or is not present on asset 110) (step 620). If wireless tag 120 is affixed to asset 110, and, for example, can properly communicate with asset 110, wireless tag 120 and asset 110 may perform operations consistent with the disclosed embodiments, such as for example, perform asset association processes, etc. (step 625). On the other hand, if the disclosed embodiments determine that wireless tag 120 is not present on asset 120, they may perform asset-based security processes (step 630). For example, wireless tag 120 may be configured to execute software processes that recognize when communications with short range communication component 130 are not available or are no longer available. Based on this determination, wireless tag 120 may be configured to generate and send an alert message to a remote element indicating this situation (e.g., step 640). Wireless tag 120 may generate and send an alert message in a manner consistent with the security processes disclosed above. In another embodiment, step 630 may include asset 110 performing one or more asset-based security processes. For instance, asset 110 may determine based on data provided by short range communication component 130 that communication with wireless tag 120 is unavailable. Based on that determination, asset 110 may perform one or more processes that control one or more operations of asset 110. For instance, module(s)/function(s) 450 may perform security processes consistent with those disclosed above (e.g., generate one or more signals that enables asset 110 to perform one or more operations (e.g., powers on asset 110, activates one or more functionalities of asset 110, etc., or disables one or more operations of asset 110).

The disclosed embodiments may also perform server-based security processes (e.g., step 650). For example, in one embodiment, server 150 may be configured to receive an alert message from wireless tag 120. In response to the alert message, server 150 may perform one or more server-based security processes, such as generating and sending a notification to one or more users including information included in the alert message. In another embodiment, server 150 may be configured to perform a process that generates and sends a message to asset 110, where the asset is configured with a long range communication interface similar to that of long range communication interface 440. The message may provide commands or data that asset 110 uses to control operation of asset 110, such as disabling asset 110, enabling asset 110, enabling or disabling one or more operations of asset 110, etc. In another embodiment, server 150 may be configured to generate and send a message associated with the alert message to client 160. In one aspect, server 150 may send an email, SMS message, or similar message to client 160. In another aspect, server 150 may generate content relating to the alert message that is included in a Web page accessible by client 160 over the Internet. Server 150 may send a notification to client 160 including a link to the Web page so that client 160 may access the Web page to view the alert message.

Client 160 may be configured to perform client-based security process(es) based on the server message. For instance, client 160 may be configured to send data or command(s) to asset 110 that asset 110 uses to control operation of asset 110, such as disabling asset 110, enabling asset 110, enabling or disabling one or more operations of asset 110, etc.

The foregoing descriptions have been presented for purposes of illustration and description. They are not exhaustive and do not limit the disclosed embodiments to the precise form disclosed. Modifications and variations are possible in light of the above teachings or may be acquired from practicing the disclosed embodiments. For example, the described implementation includes software, but the disclosed embodiments may be implemented as a combination of hardware and software. Additionally, although disclosed aspects are described as being stored in a memory on a computer, one skilled in the art will appreciate that these aspects can also be stored on one or more other types of tangible computer-readable media, such as secondary storage devices, like hard disks, floppy disks, CD-ROMs, or other forms of RAM or ROM.

Computer programs based on the written description and disclosed methods are within the capabilities of one of ordinary skill in the art. The various programs or program modules may be created using any of the techniques known to one skilled in the art, or may be designed in connection with existing software. For example, program sections or program modules can be designed in or by means of DirectX, .Net Framework, .Net Compact Framework, Visual Basic, C, XML, Java, C++, JavaScript, HTML, HTML/AJAX, or any other now known or later created programming language. One or more of such software sections or modules may be integrated into a computer system.

Other embodiments will be apparent to those skilled in the art from consideration of the specification and practice of the embodiments disclosed herein. The recitations in the claims are to be interpreted broadly based on the language employed in the claims and are not limited to examples described in the present specification or during the prosecution of the application, which examples are to be construed non-exclusive. Further, the steps of the disclosed methods may be modified in any manner, including by reordering steps and/or inserting or deleting steps. As used herein, the indefinite articles "a" and "an" mean "one or more" in open-ended claims containing the transitional phrase "comprising," "including," and/or "having." Further, since numerous modifications and variations will readily occur to those skilled in the art, it is not desired to limit the disclosure to the exact construction and operation illustrated and described, and accordingly, all suitable modifications and equivalents may be resorted to, falling within the scope of the disclosure.

## Claims

1. A method for associating a wireless tag with an asset, comprising:
establishing communication between the wireless tag and a short range communication component, wherein the wireless tag is affixed to the asset and the asset includes the short range communication component and wherein the wireless tag is in communication range with the short range communication component;
receiving, by the wireless tag, asset information from the short range communication component; and
sending, by the wireless tag, the asset information and wireless tag information to a server that associates the wireless tag with the asset based on the wireless tag information and the asset information.

2. The method of claim 1, wherein the short range communication component is an NFC component, and preferably the wireless tag includes a short range communication interface configured to communicate with the NFC component using an NFC protocol, and preferably the wireless tag includes a long range communication interface that is configured to communicate with the server over a wireless communication network.

3. A method for providing security processes associated with an asset including a short range communication component, the method comprising:
determining whether the short range communication component can communicate with a wireless tag configured to perform short range communications with the short range communication component;
generating, by the wireless tag, an alert message based on a determination that the wireless tag cannot communicate with the short range communication component;
sending, by the wireless tag, the alert message to a server over a long range communication network to allow the server to perform a server-based security process based on the alert message received from the wireless tag.

4. The method of claim 3, further comprising:
performing an asset based security process based on the determination that the wireless tag cannot communicate with the short range communication component, preferably wherein the asset based security process includes one of:
disabling all operations of the asset;
disabling one operation of the asset;
disabling a plurality of operations of the asset; and
enabling one or more operations of the asset.

5. The method of claim 3 or claim 4, further comprising:
performing an asset configuration process based on the determination that the wireless tag can communicate with the short range communication component, and preferably wherein the asset configuration process includes enabling one or more operations of the asset.

6. A wireless tag, comprising:
a short range communication interface configured to communicate over a short range communication link with a short range communication component of an asset;
a long range communication interface configured to communicate over a long range communication link with a remote element;
a memory storing software instructions; and
a processor configured to execute the software instructions to perform operations comprising:
determining whether the wireless tag can communicate with the short range communication component,
receiving asset information from the short range communication component over the short range communication link, and
sending the asset information and wireless tag information to the remote element over the long range communication link to generate an association between the wireless tag and the asset based on the asset information and the wireless tag information.

7. The wireless tag of claim 6, wherein the short range communication component is an NFC component, and the wireless tag preferably includes a short range communication interface configured to communicate with the NFC component using an NFC protocol, and preferably the wireless tag includes a long range communication interface that is configured to communicate with a server over a wireless communication network.

8. The wireless tag of claim 6 or claim 7, wherein the asset includes one of:
medical equipment;
power tool;
vehicle;
industrial equipment;
communication equipment; and
computer equipment.

9. A wireless tag, comprising:
a short range communication interface configured to communicate over a short range communication link with a short range communication component of an asset;
a long range communication interface configured to communicate over a long range communication link with a remote element;
a memory storing software instructions; and
a processor configured to execute the software instructions to perform operations comprising:
determining whether the wireless tag can communicate with the short range communication component over the short range communication link,
generating, by the wireless tag, an alert message based on a determination that the wireless tag cannot communicate with the short range communication component, and
sending, by the wireless tag, the alert message to a remote element over the long range communication link.

10. The wireless tag of claim 9, wherein the short range communication component is an NFC component, and the wireless tag preferably includes a short range communication interface configured to communicate with the NFC component using an NFC protocol, and preferably the wireless tag includes a long range communication interface that is configured to communicate with a server over a wireless communication network.

11. The wireless tag of claim 9 or claim 10, wherein the asset includes one of:
medical equipment;
power tool;
vehicle;
industrial equipment;
communication equipment; and
computer equipment.

12. A non-transitory computer-readable medium storing instructions that, when executed by a processor, cause the processor to perform a method for providing security processes associated with an asset including a short range communication component, the method comprising:
determining whether a wireless tag can communicate with the short range communication component, the short range communication component being configured to perform short range communications with the wireless tag;
generating, by the wireless tag, an alert message based on a determination that the wireless tag cannot communicate with the short range communication component;
sending, by the wireless tag, the alert message to a server over a long range communication network to allow the server to perform a server-based security process based on the alert message received from the wireless tag.

13. The non-transitory computer-readable medium of claim 12, the method further comprising:
performing an asset based security process based on the determination that the wireless tag cannot communicate with the short range communication component.

14. The non-transitory computer-readable medium of claim 13, wherein the asset based security process includes one of:
disabling all operations of the asset;
disabling one operation of the asset;
disabling a plurality of operations of the asset; and
enabling one or more operations of the asset.

15. The non-transitory computer-readable medium of claim 12, the method further comprising:
performing an asset configuration process based on a determination that the wireless tag can communicate with the short range communication component, and preferably wherein the asset configuration process includes causing the asset to perform one or more operations.
